# EUROPEAN PATENT APPLICATION

(11) **EP 4 589 457 A1**
(43) Date of publication of application: **23.07.2025**
(21) Application number: 24201927.1
(22) Date of filing: 23.09.2024
(51) Int. Cl.: G06F 21/55, G06F 21/57, H04L 9/40, G06N 3/02, G06N 20/00, G06Q 10/10

(54) **VULNERABILITY INFORMATION PROCESSING APPARATUS, METHOD, AND PROGRAM**

(30) Priority: 18.01.2024 JP 2024006343
(71) Applicant: Hitachi, Ltd., Tokyo 100-8280 (JP)
(72) Inventor: SUMIYOSHI, Takashi, Tokyo, 100-8280 (JP)
(74) Representative: MERH-IP Matias Erny Reichl Hoffmann Patentanwälte PartG mbB

(57) **Abstract**

A vulnerability information processing apparatus 100 includes a software configuration database 220, a vulnerability database 210, and a text generation unit 120. The software configuration database stores configuration information of software that needs to be managed. The vulnerability database stores vulnerability information of the software. The text generation unit calculates a countermeasure priority 310 for the software based on the configuration information and the vulnerability information and generates text 330 regarding vulnerability of the software based on the calculated countermeasure priority.

## Description

### BACKGROUND

The present invention relates to a vulnerability information processing apparatus, method, and program.

Security is becoming increasingly important in the digital society. Not only is the cybersecurity important for countries or companies, but also the security management of the products that companies provide is also becoming increasingly important. For example, in the automotive industry, the automobile cybersecurity regulation UN-R155 was enacted in discussions at the World Forum for Harmonization of Vehicle Regulations (WP.29). The international standard ISO/SAE 21434, which summarizes the requirements for cybersecurity measures, has been formulated, and cybersecurity measures for finished vehicle manufacturers and suppliers are becoming increasingly important.

One of the important points in cybersecurity measures is to obtain vulnerability information from various sources in a timely manner and take appropriate actions based on the content of the vulnerability information. The current situation is that obtaining such vulnerability information and taking appropriate actions incur a large cost for hiring experts with knowledge in both security and products.

In order to efficiently process such vulnerability information, various technologies, such as the following, have been proposed.

Japanese Patent Application Publication No. 2022-126818 describes a method of obtaining standardized data by performing standardization processing on security alert information for an apparatus and updating the security information of the apparatus based on its similarity with attack data in an attack behavior knowledge base. In this method, the cosine similarity of word frequency feature vectors is used in the similarity calculation.

Japanese Translation of PCT Application No. 2022-105474 describes a method of flexibly matching network devices that may be affected by CVEs using N-grams.

Japanese Translation of PCT Application No. 2022-527511 describes a method of extracting time expressions from security-related documents using natural language processing and allocating them to events to present more accurate information to users. That is, this method uses natural language processing to extract time expressions.

WO 2022-201309 describes a method of extracting and structuring named entities from news articles about cyber-attacks, performing dependency parsing, and registering words that modify the named entities as complementary information. In this method, a system for searching vulnerability information is constructed using natural language processing.

WO 2022-064579 describes a method of creating pseudo-teacher data from threat documents that contain descriptions relating to cyber-attacks, learning a noise model and a classification model based on the created teacher data, and classifying the threat documents using the classification model generated by learning. That is, this method uses a model learned from vulnerability information for classification.

### SUMMARY

In a department (for example, PSIRT: Product Security Incident Response Team) that specializes in security measures for a company's products or services, it is necessary to contact external organizations inside and outside of the company depending on the content of the vulnerability information. For example, suppose a new vulnerability is related to a module used in the company's product. In that case, the PSIRT must report it to the customer along with a specific example of exploitation. Furthermore, suppose PSIRT is unable to determine whether a new vulnerability may be related to a module used in the company's product. In that case, it is necessary to inquire about details from the company's design department and the like. The high cost of such communication work is an issue. The present invention aims to solve this issue by introducing an apparatus that utilizes natural language processing technologies.

The patent documents mentioned above all utilize natural language processing to handle security information. However, the patent documents mentioned above do not use natural language processing to generate texts for inquiries or reports. Therefore, the patent documents mentioned above do not address the issue that the present invention aims to solve.

The present invention has been made in consideration of the above issue, and an object thereof is to provide a technology that reduces the communication work of a security personnel.

To attain the above object, the present invention includes a software configuration database configured to store configuration information of software that needs to be managed; a vulnerability database configured to store vulnerability information of the software; a text generation unit configured to calculate a countermeasure priority for the software based on the configuration information and the vulnerability information and generate a text regarding vulnerability of the software based on the calculated countermeasure priority.

The present invention reduces the communication work of security personnel.

### BRIEF DESCRIPTION OF THE DRAWINGS

FIG. 1 is a functional block diagram showing an example of the configuration of a vulnerability information processing system;
FIG. 2 is a functional block diagram showing an example of the configuration of a vulnerability information processing apparatus;
FIG. 3 is a diagram showing an example of the hardware configuration of a vulnerability information processing apparatus;
FIG. 4 is a diagram showing an example of the configuration of a vulnerability database;
FIG. 5 is a diagram showing an example of the configuration of a software configuration database;
FIG. 6 is a diagram showing an example of the configuration of a customer product database;
FIG. 7 is a diagram showing an example of the configuration of a transmission/reception inquiry response history database;
FIG. 8 is a diagram showing an example of a prompt template;
FIG. 9 is a diagram showing an example of a screen of an input/output interface;
FIG. 10 is a flowchart showing an example of a vulnerability information update process;
FIG. 11 is a flowchart showing an example of a triage/text generation process; and
FIG. 12 is a flowchart showing an example of a token management/display process.

### DETAILED DESCRIPTION OF THE EMBODIMENT

Hereinafter, a specific example of a vulnerability information processing apparatus according to an embodiment of the present invention will be described with reference to the drawings. The present invention is not limited to the embodiment but is defined by the claims.

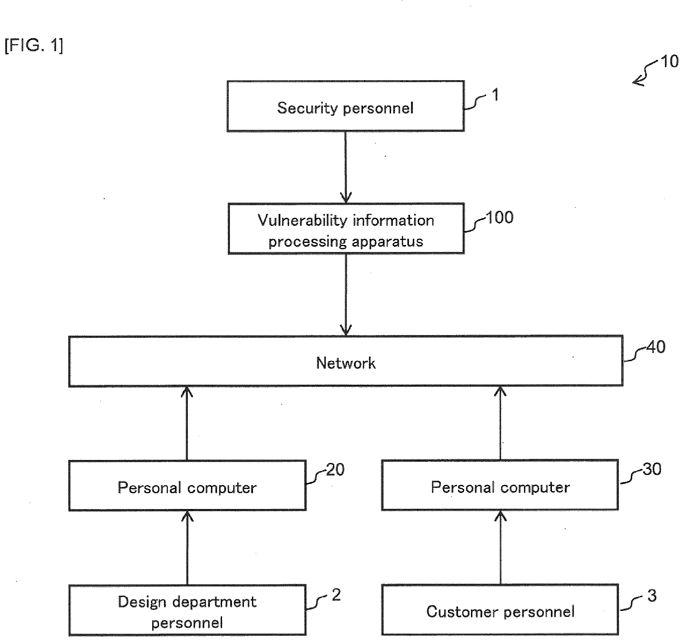

FIG. 1 is a functional block diagram showing an example of the configuration of a vulnerability information processing system.

The vulnerability information processing system 10 includes a vulnerability information processing apparatus 100. The vulnerability information processing apparatus 100 is operated by security personnel 1. The vulnerability information processing apparatus 100 is communicatively coupled to a network 40. The network 40 is also communicatively coupled to personal computers 20 and 30 operated by design department personnel 2 and customer personnel 3, respectively. The vulnerability information processing apparatus 100 and the personal computers 20 and 30 can communicate with each other via the network 40.

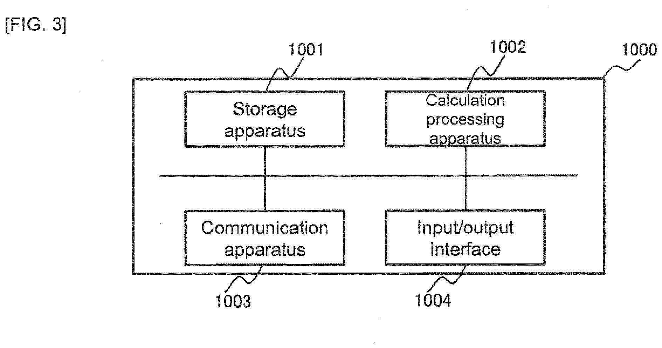

The vulnerability information processing apparatus 100 is assumed to be a personal computer equipped with software that realizes the functions described below. However, the vulnerability information processing apparatus 100 is not limited to this. The vulnerability information processing apparatus 100 may be a cloud service in which software exists on a network and the software is utilized remotely. The hardware configuration of a personal computer that realizes the vulnerability information processing apparatus 100 and the like will be described later with reference to FIG. 3.

The network 40 is assumed to be an Internet email system. However, the network 40 is not limited to this.

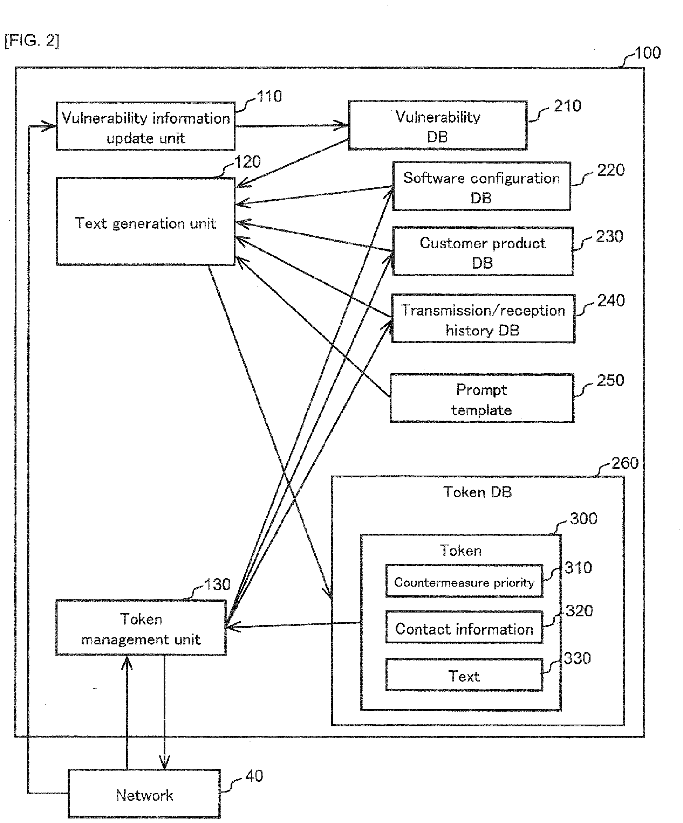

FIG. 2 is a functional block diagram showing an example of the configuration of a vulnerability information processing apparatus .

The vulnerability information processing apparatus 100 includes a vulnerability information update unit 110, a text generation unit 120, and a token management unit 130. The vulnerability information update unit 110 acquires vulnerability information from the outside via the network 40. The token management unit 130 transmits and receives data to and from other personal computers 20 and 30 via the network 40. These operations will be described later.

The vulnerability information processing apparatus 100 includes a vulnerability database 210, a software configuration database 220, a customer product database 230, a transmission/reception history database 240, and a token database 260. The token database 260 stores tokens 300. The token 300 may include a countermeasure priority 310, a contact information 320, and a text 330. The structures thereof will be described later.

The vulnerability information processing apparatus 100 includes a prompt template 250. An example thereof will be described later.

FIG. 3 is a diagram showing an example of the hardware configuration of a vulnerability information processing apparatus.

The vulnerability information processing apparatus 100 is realized, for example, by a computer 1000, as shown in FIG. 3. The computer 1000 has a storage apparatus 1001, a calculation processing apparatus 1002, a communication apparatus 1003, and an input/output interface 1004 as an example of a "user interface".

The storage apparatus 1001 may include a so-called main storage apparatus composed of, for example, a semiconductor memory, and a so-called auxiliary storage apparatus composed of, for example, a large-capacity storage apparatus such as a hard disk drive or a solid-state drive. The storage apparatus 1001 stores programs and data executed by the calculation processing apparatus 1002. The programs include a vulnerability information processing program.

The calculation processing apparatus 1002 executes various kinds of processing according to the programs stored in the storage apparatus 1001. The calculation processing apparatus 1002 operates according to the programs to realize various functional units. For example, each function of the vulnerability information processing apparatus 100 is realized by the calculation processing apparatus 1002 operating according to the programs stored in the storage apparatus 1001 in the computer 1000 corresponding to the vulnerability information processing apparatus 100.

The communication apparatus 1003 is an interface for coupling to other communication networks. The input/output interface 1004 may include an input apparatus such as at least one of a keyboard, a mouse, and a touch panel, and an output apparatus such as an image display apparatus.

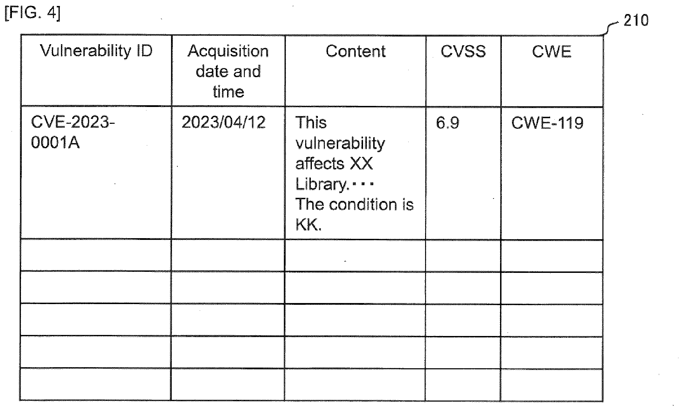

FIG. 4 is a diagram showing an example of the configuration of a vulnerability database.

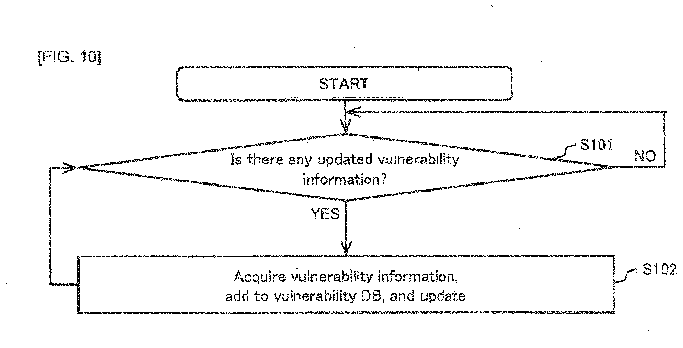

The vulnerability database 210 stores the vulnerability information of software that needs to be managed. Specifically, each record in the vulnerability database 210 represents each piece of vulnerability information and is added and updated in step 102 of FIG. 10 described later. The vulnerability database 210 stores vulnerability ID, acquisition date and time, content, CVSS, and CWE as item values (column values).

The vulnerability ID is assigned when vulnerability information is acquired. The vulnerability ID is an identifier used to uniquely identify the vulnerability information. In the case of vulnerability information managed by CVE, the identifier defined in CVE can be used as the vulnerability ID. The acquisition date and time are the dates and times when the vulnerability information was acquired. The content stores a description of the vulnerability in a text format. The CVSS and CWE are the information included in the vulnerability information and are stored as necessary. Information other than that mentioned here may be stored in the record.

As an example, the first row of the vulnerability database 210 will be described. The first row is related to the vulnerability ID "CVE-2023-0001A". This first row indicates that the acquisition date and time are "2023/04/12", the content is "This vulnerability affects AA Library.... The condition is KK", CVSS is "6.9", and CWE is "CWE-119".

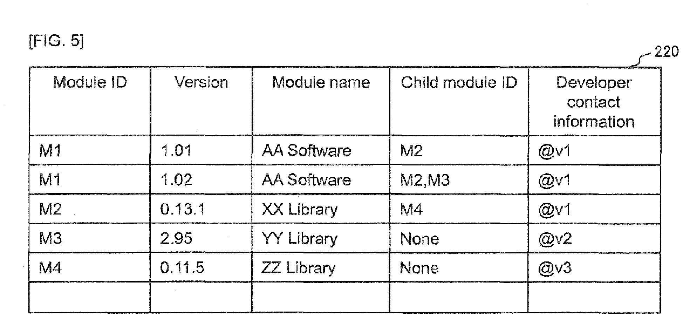

FIG. 5 is a diagram showing an example of the configuration of the software configuration database 220.

The software configuration database 220 stores the configuration information of the software that needs to be managed. Specifically, the software configuration database 220 stores information about modules managed by the vulnerability information processing apparatus 100. The information stored in the software configuration database 220 is prepared in advance by the security personnel 1 or someone similar and updated as necessary.

Each record in the software configuration database 220 represents information about a specific version of a module. The software configuration database 220 stores the module ID, version, module name, child module ID, and developer contact information as item values (column values).

The module ID is an identifier used to identify a module. The version is a number used to identify the version of a module. The module ID and the version are the primary keys of the software configuration database 220. The module name is the name of the module. The child module ID is an identifier of the module, including each version of each module. The developer contact information is the contact information (for example, an email address) for the developer of each version of each module.

As an example, the first row of the software configuration database 220 will be described. The first row is related to the module ID "M1". This first row indicates that the version is "1.01", the module name is "AA Software", the child module ID is "M2", and the developer contact information is "@v1".

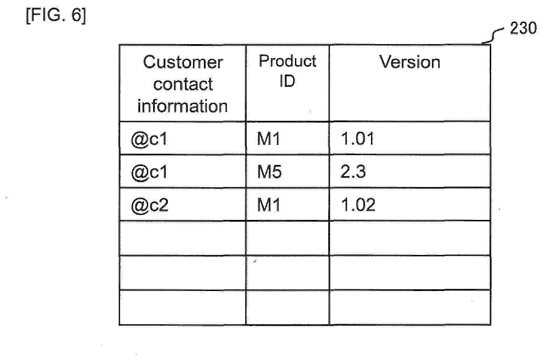

FIG. 6 is a diagram showing an example of the configuration of the customer product database.

The customer product database 230 stores customer product information for the software that needs to be managed. Specifically, the customer product database 230 stores information about the customer's product, which is to be managed by the vulnerability information processing apparatus 100. The information stored in the customer product database 230 is prepared in advance by the security personnel 1 or someone similar and updated as necessary.

Each record in the customer product database 230 represents customer product information. The customer product database 230 stores customer contact information, product ID, and version as item values (column values).

The customer contact information is the contact information for each customer (for example, email address). The product ID is the module ID in the software configuration database 220, corresponding to the product held by each customer. The version is the version of each product held by each customer.

As an example, the first row of the customer product database 230 will be described. The first row is related to the customer contact information "@c1". This first row indicates that the product ID is "M1" and the version is "1.01".

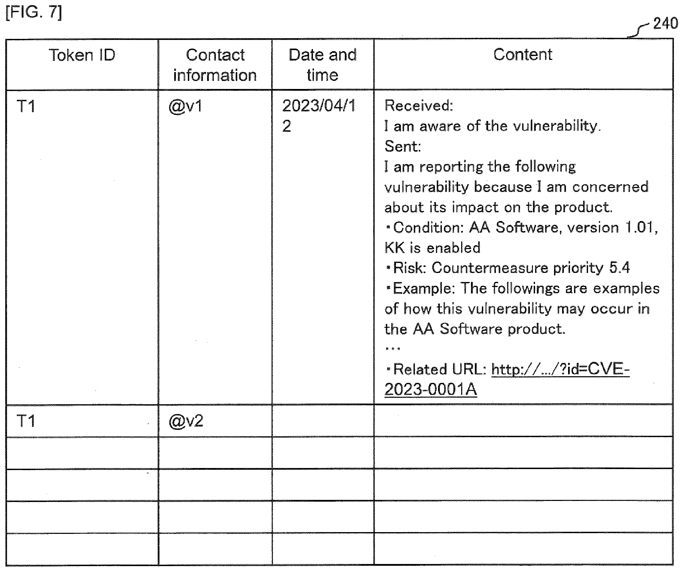

FIG. 7 is a diagram showing an example of the configuration of the transmission/reception history database.

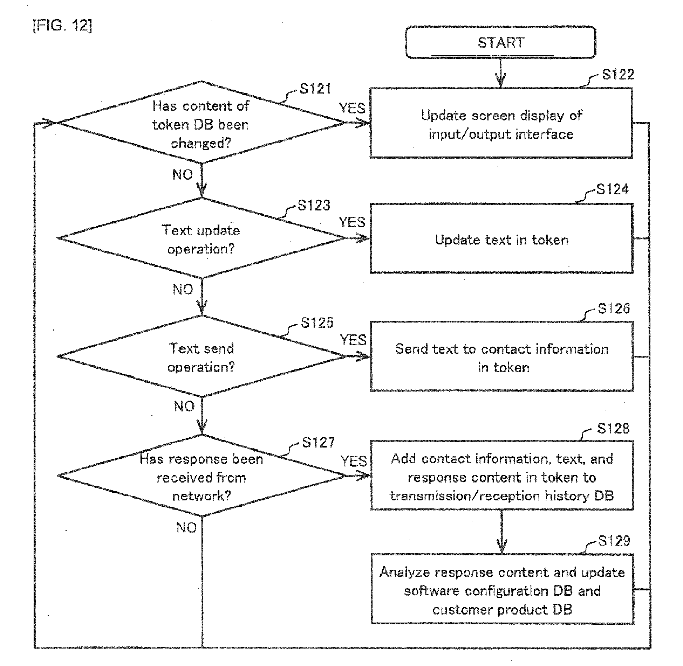

The transmission/reception history database 240 stores the transmission/reception history with the developer and the customer of the software that needs to be managed. Specifically, each record in the transmission/reception history database 240 represents the inquiry response history to a specific contact information and is created in step 128 of FIG. 12 described later. The transmission/reception history database 240 stores the token ID, contact information, date and time, and content as item values (column values).

The token ID is an identifier used to identify a token, and the value of the token ID in the token database 260 is stored. The contact information is the contact information that represents the person to contact when processing each token. The contact information stores the value of either the developer contact information in the software configuration database 220 or the customer contact information in the customer product database 230. The date and time indicate the dates and times when the inquiry response history was updated. The content stores the text sent to the contact information or the response text from the contact information in response to that in a text format.

As an example, the first row of the transmission/reception history database 240 will be described. The first row is related to the token ID "T1". This first row indicates that the contact information is "@v1", the date and time is "2023/04/12", and the content is "I am reporting the following vulnerability because I am concerned about its impact on the product." Specifically, the content includes "Condition: AA Software, Version 1.01, KK is enabled, Risk: Countermeasure priority 5.4, Example: The followings are examples of how this vulnerability may occur in the AA Software product.... Related URL: http://.../?id=CVE-2023-0001A1".

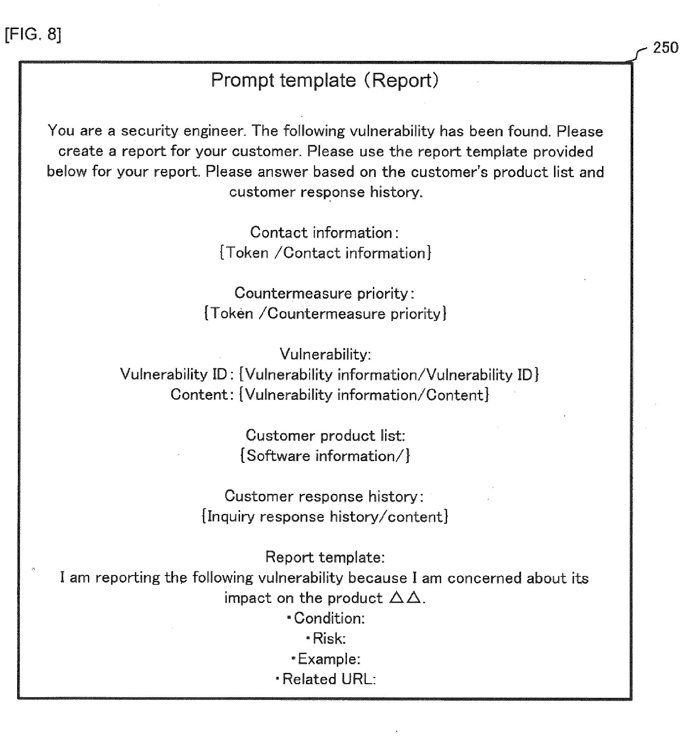

FIG. 8 is a diagram showing an example of a prompt template.

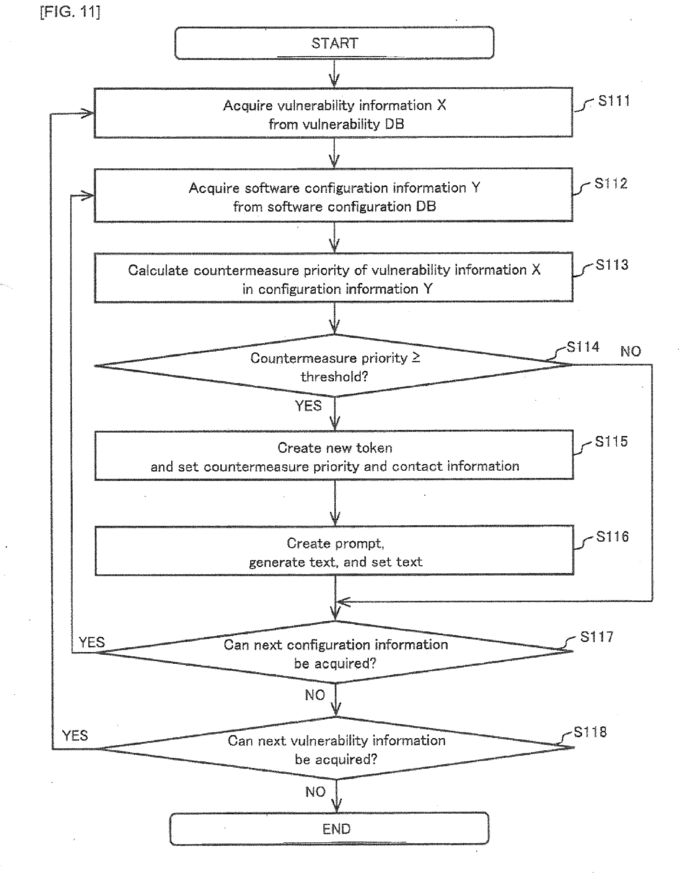

The prompt template 250 has a placeholder. The placeholder is the part surrounded by curly brackets "{ }" and is replaced by the content written in the curly brackets in step 116 of FIG. 11. For example, the placeholder "{token/contact information}" is replaced by the content of the contact information field of each token.

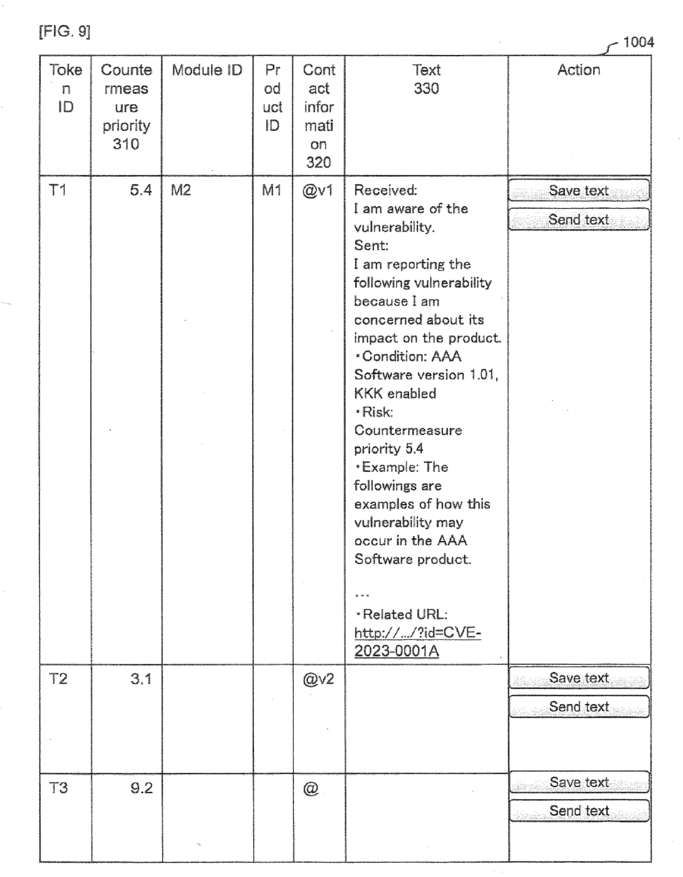

FIG. 9 is a diagram showing an example of the input/output interface screen.

The screen of the input/output interface 1004 displays the content of the token 300 stored in the token database 260 and the actions operated by the security personnel 1. For example, the actions are "save text" and "send text".

Each record in the token database 260 represents a token 300 and is created in step 115 of FIG. 11. The token database 260 stores the token ID, countermeasure priority 310, module ID, contact information 320, and text 330 as item values (column values).

The token ID is an identifier used to identify the token 300. The countermeasure priority 310 is the countermeasure priority of each token 300 (software) . The module ID is the module ID to which each token 300 is related. The product ID is the product ID to which each token 300 is related. The contact information is the contact information that represents the person to contact when processing each token 300. The contact information 320 stores either the developer contact information in the software configuration database 220 or the customer contact information in the customer product database 230. The text 330 indicates a text about software vulnerabilities sent to the contact information 320 or a text received from the contact information 320. The text 330 sent is an inquiry to the developer or a report to the customer.

FIG. 10 is a flowchart showing an example of a vulnerability information update process.

The vulnerability information update process is started immediately after the vulnerability information processing apparatus 100 is started.

First, the vulnerability information update unit 110 searches for updated vulnerability information via the network 40 and determines whether there is any updated vulnerability information (S101). If the determination result in S101 is true (S101: YES), the vulnerability information update unit 110 acquires vulnerability information, adds the same to or updates the vulnerability database 210, and searches again (S102). If the determination result in S101 is false (S101: NO), the vulnerability information update unit 110 searches again.

The vulnerability information update unit 110 searches in vulnerability databases published on the Internet, such as CVE, NVD, and JVN, or in a general search engine by specifying the module name of the software configuration database 220. In this way, it is possible to ensure that the vulnerability information in the vulnerability database 210|_{[A1]} remains up to date.

FIG. 11 is a flowchart showing an example of a text generation process.

The text generation process is started when either the vulnerability database 210 or the software configuration database 220 is updated.

First, the text generation unit 120 obtains vulnerability information X from the vulnerability database 210 (S111).

Next, the text generation unit 120 obtains software configuration information Y from the software configuration database 220 (S112) .

Next, the text generation unit 120 calculates the countermeasure priority 310 of the vulnerability information X in the configuration information Y (S113). For example, the text generation unit 120 calculates the relevance of whether the vulnerability information X mentions the module name or version of the configuration information Y based on the module name in the configuration information Y and the content of the vulnerability information X using the TF/IDF score. Then, the text generation unit 120 multiplies the calculated relevance by the CVSS severity score of the vulnerability information X to calculate the countermeasure priority 310.

The calculation of the countermeasure priority 310 is not limited to the above method, and any method can be used. For example, a pre-trained machine learning model that takes the content of the vulnerability information X and the module name and version of the configuration information Y as inputs and provides the countermeasure priority 310 as an output may be used.

The text generation unit 120 may calculate the countermeasure priority 310 based on the configuration information Y, the vulnerability information X, and the transmission/reception history, or may calculate the countermeasure priority 310 based on the configuration information Y, the vulnerability information X, the transmission/reception history, and the customer product information. In this way, it is possible to improve the accuracy of the priority for generating the text 330.

Next, the text generation unit 120 determines whether the countermeasure priority 310 is equal to or larger than a predetermined threshold (S114). If the determination result in S114 is true (S114: YES), the text generation unit 120 creates a new token 300 and sets the countermeasure priority 310 and the contact information 320 (S115) . Then, the text generation unit 120 creates a prompt, generates the text 330, and sets the generated text 330 (S116).

Here, the contact information 320 is the developer contact information of the configuration information Y, and the customer contact information of the record in the customer product database 230 that includes the configuration information Y. The record that includes the configuration information Y is determined by recursively searching the child module fields, starting from the record in the software configuration database 220 that has a module ID that matches the product ID, and determining whether one or more of all reachable descendant modules are the configuration information Y.

The text generation unit 120 uses the prompt template 250 to create a prompt. The prompt template 250 has placeholders in some parts of the instruction text to be input to the text generation module. An instruction text is generated by substituting values that can be obtained from various databases 210 and 220 related to the vulnerability information X and the configuration information Y into the placeholder parts, and the text 330 related to the vulnerability information X and the configuration information Y is obtained by inputting the instruction text to the text generation module. Here, the text generation module may use a generation model based on the Transformer (for example, the GPT model) which is an existing technology. The generation model may be an existing one (for example, GPT-3) that has been pre-trained with a large amount of arbitrary text, or it may be a model that has been fine-tuned using a dataset that collects input and output data related to this task.

The text generation unit 120 may use a method of directly generating the text 330 by using a text template and substituting values into placeholders in the template without using a prompt and a generation model. The text generation unit 120 may create a prompt based on at least one of the configuration information, vulnerability information, the transmission/reception history, the customer product information, and the countermeasure priority information input into the placeholders. In this way, it is possible to improve the accuracy of generating the text 330.

Next, the text generation unit 120 determines whether the configuration information of the next software can be obtained from the software configuration database 220 (S117). The process returns to S112 if the determination result is true (S117: YES), and the process proceeds to S118 if the determination result is false (S117: NO).

Then, the text generation unit 120 determines whether the next vulnerability information can be obtained from the vulnerability database 210 (S118). The process returns to S111 if the determination result is true (S118: YES), and the process ends if the determination result is false (S118: NO).

By the process mentioned above, the countermeasure priority 310, contact information 320, and text 330 for the updated vulnerability database 210 or software configuration database 220 can be reflected in the token database 260.

FIG. 12 is a flowchart showing an example of the token management and display process.

The token management and display process is started immediately after the vulnerability information processing apparatus 100 is started. In that case, the token management and display process start from S122.

First, the token management unit 130 determines whether the content of the token database 260 has changed (S121) . If the determination result is true (S121: YES), the token management unit 130 updates the screen display of the input/output interface 1004 (S122).

Next, the token management unit 130 determines whether the update operation of the text 330 was performed by the security personnel 1 (S123). If the determination result is true (S123: YES), the token management unit 130 updates the text 330 of the token 300 in the token database 260 (S124).

Next, the token management unit 130 determines whether the send operation of the text 330 was performed by the security personnel 1 (S125) . If the determination result is true (S125: YES), the token management unit 130 transmits the text 330 of the token 300 in the token database 260 to the contact information 320 of the token 300 via the network 40 (S126).

The token management unit 130 then determines whether a response has been received from the network 40 (S127) . If the determination result is true (S127: YES), the token management unit 130 adds the contact information 320 of the token 300, the text 330, and the response content to the transmission/reception history database 240 (S128). The token management unit 130 analyzes the response content and updates the software configuration database 220 and the customer product database 230 (S128).

The analysis of the response content determines whether the response content includes details of the software configuration information or detailed information of the customer product by using, for example, intent understanding, which is one of the natural language processing and slot-filling technologies.

According to this configuration, the vulnerability information processing apparatus 100 includes the software configuration database 220, the vulnerability database 210, and the text generation unit 120. The software configuration database 220 stores the configuration information of thesoftware that needs to be managed. The vulnerability database 210 stores the vulnerability information of the software. The text generation unit 120 calculates the countermeasure priority 310 for the software based on the configuration information and the vulnerability information and generates the text 330 regarding vulnerability of the software based on the calculated countermeasure priority 310.

As a result, the text 330 regarding the vulnerability of the software is generated on the basis of the countermeasure priority calculated from the configuration information and the vulnerability information. In this way, it is possible to reduce the communication work of the security personnel.

The text generation unit 120 generates the text 330 for the developer or customer whose countermeasure priority 310 exceeds the threshold. As a result, the developer or customer whose countermeasure priority 310 is low can be triaged and the text 330 can be generated.

The text 330 is at least one of an inquiry text to the developer and a report text to the customer. In this way, it is possible to generate the text 330 for either the developer or the customer.

The system includes the prompt template 250 with placeholders. The text generation unit 120 creates a prompt based on at least one of the configuration information or vulnerability information input to the placeholder and inputs the created prompt into a machine learning model to generate the text 330. In this way, it is possible to learn the created prompt to generate the text 330.

The system includes the token management unit 130 that stores the text 330 sent to the contact information 320 of the developer or the customer determined by the text generation unit 120 and the response received from the contact information 320 in the transmission/reception history database 240. In this way, it is possible to appropriately acquire the text 330 sent to the contact information 320 and the response received from the contact information 320.

The system includes the input/output interface 1004 displays the text 330 and the contact information 320 to the software security personnel 1 and also receives instructions from the security personnel 1. In this way, it is possible to execute processing that reflects the intention of the security personnel 1 via the input/output interface 1004.

The text generation unit 120 updates the software configuration database 220 or the customer product database 230 based on the content of the response. In this way, it is possible to update the configuration information in the software configuration database 220 and the customer product information in the customer product database 230.

Note that the present invention is not limited to the above-mentioned embodiment, and includes various modified examples. For example, the above-mentioned embodiment has been described in detail to clearly explain the present invention, and is not necessarily limited to those that include all of the described configurations. In addition, a part of the configuration of one embodiment may be replaced with the configuration of another embodiment, and a configuration of another embodiment may be added to a configuration of one embodiment. It is possible to add, delete, or replace a part of the configuration of each embodiment with another configuration.

## Claims

1. A vulnerability information processing apparatus comprising:
a software configuration database configured to store .configuration information of software that needs to be managed;
a vulnerability database configured to store vulnerability information of the software;
a text generation unit configured to calculate a countermeasure priority for the software based on the configuration information and the vulnerability information and generate a text regarding vulnerability of the software based on the calculated countermeasure priority.

2. The vulnerability information processing apparatus according to claim 1, further comprising:
a transmission/reception history database configured to store transmission/reception history with a developer and a customer of the software, wherein
the text generation unit calculates the countermeasure priority based on the configuration information, the vulnerability information, and the transmission/reception history.

3. The vulnerability information processing apparatus according to claim 2, wherein
the text generation unit generates the text for the developer or the customer whose the countermeasure priority exceeds a threshold.

4. The vulnerability information processing apparatus according to claim 2, further comprising:
a customer product database configured to store customer product information of the software, wherein
the text generation unit calculates the countermeasure priority based on the configuration information, the vulnerability information, the transmission/reception history, and the customer product information.

5. The vulnerability information processing apparatus according to claim 2, wherein
the text is at least one of an inquiry text to the developer and a report text to the customer.

6. The vulnerability information processing apparatus according to claim 4, further comprising:
a prompt template with a placeholder, wherein
the text generation unit creates a prompt based on at least one of the configuration information and the vulnerability information input to the placeholder and inputs the created prompt into a machine learning model to generate the text.

7. The vulnerability information processing apparatus according to claim 6, wherein
the text generation unit creates the prompt based on at least one of the configuration information, the vulnerability information, the transmission/reception history, the customer product information, and the countermeasure priority input to the placeholder.

8. The vulnerability information processing apparatus according to claim 4, further comprising:
a token management unit configured to store the text sent to contact information of the developer or the customer determined by the text generation unit and the response received from the contact information in the transmission/reception history database.

9. The vulnerability information processing apparatus according to claim 8, further comprising:
a user interface which displays the text and the contact information to security personnel of the software and through which the security personnel inputs instructions.

10. The vulnerability information processing apparatus according to claim 8, wherein
the text generation unit updates the software configuration database or the customer product database based on a content of the response.

11. A vulnerability information processing method by a vulnerability information processing apparatus,
wherein the vulnerability information processing apparatus comprises:
a text generation unit configured to calculate a countermeasure priority for the software based on the configuration information of software that needs to be managed and the vulnerability information of the software and generate a text regarding vulnerability of the software based on the calculated countermeasure priority.

12. A vulnerability information processing program to be executed by a vulnerability information processing apparatus,
wherein the vulnerability information processing apparatus execute:
calculating a countermeasure priority for the software based on configuration information of software that needs to be managed and vulnerability information of the software; and
generating a text regarding vulnerability of the software based on the calculated countermeasure priority.
